# EUROPEAN PATENT SPECIFICATION

(11) **EP 0 410 601 B1**
(45) Date of publication and mention of the grant of the patent: **07.12.1994**
(21) Application number: 90307488.8
(22) Date of filing: 09.07.1990
(51) Int. Cl.: C04B 35/80, C04B 38/06, B01D 39/20

(54) **Composite ceramic material**
Keramischer Verbundwerkstoff
Materiau composite ceramique

(30) Priority: 28.07.1989 GB 8917231
(43) Date of publication of application: 30.01.1991
(73) Proprietor: FOSECO INTERNATIONAL LIMITED, Nechells Birmingham B7 5JR (GB)
(72) Inventor: George, Raymond Douglas, Sutton Coldfield, West Midlands, B75 6BE (GB); Jones, David Llewellyn, Birmingham, B29 6NP (GB); Plowman, Andrew Martin, Puerto Ordaz, Estado Bolivar (VE)
(74) Representative: Eyles, Winifred Joyce

(56) References cited:
- EP-A- 0 361 356
- FR-A- 2 250 722
- FR-A- 2 610 923
- US-A- 4 342 664
- US-A- 4 760 038
- CHEMICAL ABSTRACTS, vol. 85, no. 8, 23rd August 1976, page 286, abstract no. 51006u, Columbus, Ohio, US; & JP-A-49 129 197 (SUMITOMO CHEMICAL CO., LTD) 13-05-1976

## Description

This invention relates to novel composite ceramic materials, to methods of making them and to products made therefrom. The ceramic materials of the invention may have applicability in a wide range of end products but are particularly useful for ceramic foam products such as are used for hot gas filtration, catalyst carriers and filters for molten metals, e.g. aluminium and its alloys with magnesium and copper.

Composite ceramic materials are known in which a ceramic matrix of, for example, silicon carbide, alumina, silica, pre-fused mullite, zirconia or mixtures thereof, together with suitable binders and additives to give the desired rheological and other properties, is strengthened by the addition of a small proportion of fibres. The fibres are preferably ceramic fibres.

FR-A-2610923 teaches a lightweight refractory material of improved heat resistance which is formed by mixing a relatively large proportion of aluminous fibres with a relatively large amount of amorphous silica together with no more than an equal amount of refractory particles and shaping and firing the mixture at 1400°C to 1600°C until it contains no detectable crystobalite.

US-A-4342664 teaches that a ceramic slurry containing alumina and fibres may be used to impregnate a polyurethane foam and then to burn off the polyurethane foam to leave a fired ceramic replica of the foam.

We have now found that by selection of the matrix material and the fibre constituent a novel composite material can be formed. The fired material has surprising constructional features and advantageous properties and it may be possible to obtain these advantages by firing at relatively low temperatures.

Accordingly, in one aspect the invention provides a method of making a composite ceramic material comprising forming an aqueous slurry containing a dispersion of fibres, filler, colloidal silica, and rheological agents, forming the slurry to the desired shape and firing the product, characterised in that the fibres are alumina fibres in an amount of up to 5% by weight of the fibre-containing slurry and the colloidal silica is incorporated in an amount of from 1% to 6% by weight of the fibre-containing slurry.

The method of the invention results in a composite ceramic structure in which the silica is largely or entirely converted to mullite and this may be so even if a relatively low temperature firing is used. Although not wishing to be limited to any particular theory, it is believed that the alumina fibres are not only acting as a conventional reinforcing agent but they are acting to catalyse the conversion of the silica to mullite and thereby forming a ceramic bond.

Accordingly, in a further aspect, the invention provides a composite ceramic material comprising an alumina matrix, made by firing a shaped product formed from an aqueous ceramic slurry containing alumina fibres, filler and colloidal silica, the matrix containing mullite formations from the colloidal silica filler and alumina fibres, part at least of the mullite growth being on the surface of the fibres, characterised in that the matrix contains globular areas substantially uniformly distributed throughout the matrix, the globular areas being substantially remote from the fibres and being associated with areas of porosity.

The mullite formations on the surfaces of the fibres bond the fibres more effectively to the ceramic matrix and the strength of the resulting material is enhanced. Moreover, the shrinkage rate of the ceramic matrix on firing is reduced and this has a significant effect on the reduction of cracking, and hence, the reject rate, which can be extremely important, particularly in the manufacture of ceramic foam products such as large, cast-house filters.

In order to increase these beneficial effects, it is preferred to form the aqueous slurry to be used in the method of the invention by first dispersing the alumina fibres in the colloidal silica and a proportion, for example about half, of the total amount of water to be used. When the fibres are fully dispersed, the remaining ingredients can then be added to the slurry and dispersed therein. By this means the fibres are more effectively coated with the colloidal silica and mullite formation is thereby encouraged on the fibres during the firing stage.

As indicated above, we have also, surprisingly, found that these mullite formations may be obtained by utilising the process of the invention but when firing at relatively low temperatures. By 'low temperature' here is meant treatment to temperatures not exceeding about 1350°C.

As indicated above, the colloidal silica is incorporated into the aqueous slurry from which the ceramic material is to be made in an amount of from 1% to 6% by weight of silica. This may conveniently be achieved using a colloidal silica sol in an amount of from 2% to 12% by weight, typical sols having a solids content of silica of from about 30% to 50% by weight.

The alumina is preferably present in an amount of from 15% to 70%, especially 40% to 60% by weight. The alumina preferably has a particle size of from 60 to 1 micron for example, about 7 microns -D50.

An inert filler, preferably zircon, should be included, preferably in an amount of from 15% to 30% by weight. The inert filler helps to rigidise the structure on firing and to limit shrinkage. It should preferably be of a size from 80 to 1 micron, e.g. 15 to 25 microns -D50.

Additionally, an active filler, e.g. titania or magnesia, should preferably be included in an amount of 0.5% to 5% by weight. For example, a pigment grade of titania of average particle size (D50) of 2 microns could preferably be used. Reactive rheological agents such as clay and fumed silica may also be used in amounts up to about 5% by weight each.

Minor amounts of stabilisers and coating aids may be added if desired.

The water content of the slurry will depend on the product to be made and may be, for example, from 5 to 25% by weight.

The fibre content of the slurry is preferably from 0.25% to 3% by weight.

The alumina fibres used should preferably be of low alpha phase and may have lengths of, for example, from 600 to 60 microns. Particularly suitable fibres are those commercially available under the name SAFFIL (which is a Trade Mark of I.C.I.). Preferably, by alumina fibre is meant high alumina fibres which have an alumina content of not less than 80%, preferably not less than 95%.

The method of the invention has been found to be particularly useful for the manufacture of ceramic foam filters. Such filters and methods of making them are well known, see for example, US-A-4342664 referred to above. Typically, a reticulated, open-cell flexible polyurethane foam is impregnated with a suitable ceramic slurry, excess slurry is expelled by compression of the foam and the impregnated foam is then fired at a temperature sufficiently high to burn off the polyurethane foam and to leave a fired open-cell ceramic foam replica.

Accordingly, in one embodiment the invention provides a method of making the composite ceramic material as an open-cell ceramic foam material in which a reticulated, open-cell, flexible polyurethane foam is impregnated with an aqueous slurry formed according to Claim 1 below and the impregnated foam is dried and fired to burn off the polyurethane foam whereby a fired ceramic foam filter is obtained.

We have found that the mullite formation that is obtained by the process of the invention is particularly advantageous in the production of ceramic foam filters.

Microscopic examination of the ceramic composite material of the invention, including Scanning Electron Microscope (SEM) examination, has confirmed the novel features of the structure of the ceramic matrix. Thus, the structure contains 'globular' areas which are fairly uniformly distributed throughout the matrix and contain evenlydistributed areas of relatively fine porosity. These areas are remote from the fibres but experiments with equivalent slurries excluding the fibres have not resulted in the ordered formations of these globules. These formations strengthen the ceramic and halt crack propagation, this latter effect also being assisted by the areas of porosity. The reasons for the formation of these globules are not fully understood. Polished sections of composite products when photographed at low power magnification indicate that the globules, which contain alumina, silica and mullite in varying proportions and their associated porosity regions are formed in an orderly structure through the ceramic matrix whereas the particles of inert filler such as zircon, are randomly distributed. Thus, the products of the invention have a particular, novel and advantageous matrix constitution.

The invention is illustrated by way of example only in the accompanying drawings in which:
Figure 1 is an SEM photograph taken at 7700 magnification of a portion of a composite ceramic product of the invention;
Figure 2 is an SEM photograph taken at 800 magnification showing the grain orientation within the ceramic matrix.

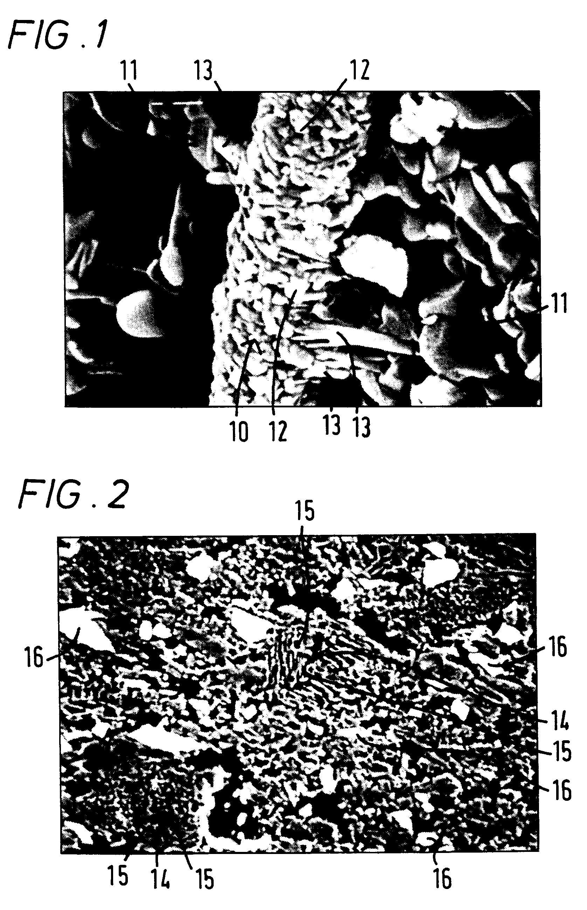

In Figure 1 an alumina fibre 10 can be seen embedded in the ceramic matrix 11, the fibre exhibiting clearly mullite formations 12 on its normally smooth surface and nodules 13 of mullite extending from the fibre into the matrix, thereby improving the bonding effect.

In Figure 2, can be seen globular areas 14 containing relatively fine voids or areas of porosity 15. Particles 16 of inert filler are randomly distributed in the ceramic matrix.

One embodiment of the invention will now be illustrated by way of the following specific Example in which all parts are by weight.

### EXAMPLE

Ceramic foam filters suitable for the filtration of molten aluminium were made as follows:

A ceramic slurry of the following formulation was made in the manner described below.

| | Parts by weight |
|---|---|
| alumina (particle size D50 = 7 microns) | 52.44 |
| fumed silica | 2.43 |
| polyvinyl alcohol (coating aid) | 3.01 |
| colloidal silica (30% Sol) | 6.88 |
| titania | 0.95 |
| zircon (200 mesh) | 20.11 |
| rheological thickener/dispersant | 0.05 |
| anti-foam agent | 0.16 |
| clay | 2.65 |
| SAFFIL fibres (150 microns) | 1.06 |
| Water | 10.26 |

The alumina fibre was dispersed in the colloidal silica and half of the water together with the dispersant. When the fibres were fully dispersed the anti-foam agent, thickener, then fumed silica, clay, titania, zircon and alumina were added and then the polyvinyl alcohol, with continued stirring. Stirring was continued until the slurry reached a dough-like state. Further stirring and addition of the remainder of the water resulted in a smooth, creamy slurry.

Reticulated, open-cell flexible polyurethane foam pieces were impregnated with the slurry and then dried at 180 to 190°C. They were then fired at 1300°C for two hours. The polyurethane foam burned out leaving open-cell ceramic foam filters that were eminently suitable for use as filters for molten aluminium and its alloys.

Examination of the filters by X-Ray diffraction and SEM showed that the silica was entirely converted to mullite and strong, crack-free products had been obtained.

## Claims

1. A method of making a composite ceramic material comprising forming an aqueous slurry containing a dispersion of fibres, filler, colloidal silica and rheological agents, forming the slurry to the desired shape and firing the product, characterised in that the fibres are alumina fibres in an amount of up to 5% by weight of the fibre-containing slurry and the colloidal silica is incorporated in an amount of from 1% to 6% by weight of the fibre-containing slurry.

2. A method according to Claim 1, characterised in that the alumina fibres are of low alpha phase and have lengths from 60 to 600 microns.

3. A method according to Claim 1 or 2, characterised in that the firing is carried out at a temperature not exceeding about 1350°C.

4. A method according to claim 1, 2 or 3, characterised in that the filler includes an inert filler in an amount of from 15% to 30% by weight of the fibre-containing slurry.

5. A method according to any one of the preceding claims, characterised in that the filler includes an active filler in an amount of from 0.5% to 5% by weight of the fibre-containing slurry.

6. A method according to any one of the preceding claims, characterised in that the alumina fibres are first dispersed in the colloidal silica and a proportion of the total water to be used.

7. A method according to any one of the preceding claims, characterised in that a reticulated, open-cell, flexible polyurethane foam is impregnated with the aqueous ceramic slurry and the impregnated foam is dried and fired to burn off the polyurethane foam, whereby a fired ceramic foam filter is obtained.

8. A composite ceramic material comprising an alumina matrix, made by firing a shaped product formed from an aqueous ceramic slurry containing alumina fibres, filler and colloidal silica, the matrix (11) containing mullite formations (12) from the colloidal silica filler and alumina fibres (10), part at least of the mullite growth being on the surface of the fibres (10), characterised in that the matrix (11) contains globular areas (14) substantially uniformly distributed throughout the matrix (11), the globular areas being substantially remote from the fibres (10) and being associated with areas of porosity.

9. A composite ceramic material according to Claim 8, characterised in that the alumina fibres (10) are of low alpha phase.

10. A composite ceramic material according to Claim 8 or 9, characterised in that the alumina fibres (10) have an alumina content of at least 80%.

11. A composite ceramic material according to Claim 8, 9 or 10, characterised in that it contains an inert filler (16) randomly distributed throughout the matrix (11).

12. A composite ceramic material according to any one of Claims 8 to 11, characterised in that the mullite growths (12) on the surface of the fibres (10) include nodules (13) of mullite extending from the fibre (10) into the matrix (11), thereby improving the bonding effect.

## Patentansprüche

1. Verfahren zur Herstellung eines keramischen Verbundstoffs, bei dem man eine wäßrige, eine Dispersion von Fasern, Füllstoff, kolloidaler Kieselsäure und Fließmitteln enthaltende Aufschlämmung bildet, die Aufschlämmung zu der gewünschten Gestalt formt und das Produkt brennt, dadurch gekennzeichnet, daß als Fasern Aluminiumoxidfasern in einer Menge von bis zu 5 Gew.-% der faserhaltigen Aufschlämmung vorliegen und die kolloidale Kieselsäure in einer Menge von 1 bis 6 Gew.-% der faserhaltigen Aufschlämmung eingearbeitet ist.

2. Verfahren nach Anspruch 1, dadurch gekennzeichnet, daß die Aluminiumoxidfasern der Niedrig-alpha-Phase angehören und Längen von 60 bis 600 Mikron aufweisen.

3. Verfahren nach Anspruch 1 oder 2, dadurch gekennzeichnet, daß das Brennen bei einer Temperatur nicht über etwa 1350°C durchgeführt wird.

4. Verfahren nach Anspruch 1, 2 oder 3, dadurch gekennzeichnet, daß der Füllstoff einen inerten Füllstoff in einer Menge von 15 bis 30 Gew.-% der faserhaltigen Aufschlämmung einschließt.

5. Verfahren nach einem der vorhergehenden Ansprüche, dadurch gekennzeichnet, daß der Füllstoff einen aktiven Füllstoff in einer Menge von 0,5 bis 5 Gew.-% der faserhaltigen Aufschlämmung einschließt.

6. Verfahren nach eine der vorhergehenden Ansprüche, dadurch gekennzeichnet, daß die Aluminiumoxidfasern zunächst in der kolloidalen Kieselsäure und einem Anteil des gesamten zu verwendenden Wassers dispergiert werden.

7. Verfahren nach einem der vorhergehenden Ansprüche, dadurch gekennzeichnet, daß ein vernetzter, offenzelliger Polyurethanweichschaum mit der wäßrigen keramischen Aufschlämmung imprägniert wird und der imprägnierte Schaum getrocknet und gebrannt wird, um den Polyurethanschaum wegzubrennen, wodurch man ein gebranntes keramisches Schaumfilter erhält.

8. Keramischer Verbundstoff mit einer Aluminiumoxidmatrix, hergestellt durch Brennen eines aus einer Aluminiumoxidfasern, Füllstoff und kolloidale Kieselsäure enthaltenden, wäßrigen keramischen Aufschlämmung gebildeten Formkörpers, wobei die Matrix (11) Mullitbildungen (12) aus dem kolloidalen Kieselsäurefüllstoff und Aluminiumoxidfasern (10) enthält, wobei der Mullit zumindest teilweise auf der Oberfläche der Fasern (10) gewachsen ist, dadurch gekennzeichnet, daß die Matrix (11) kugelförmige, im wesentlichen über die ganze Matrix (11) gleichförmig verteilte Gebiete (14) enthält, die wesentlich von den Fasern (10) entfernt liegen und Porositätsgebieten zugeordnet sind.

9. Keramischer Verbundstoff nach Anspruch 8, dadurch gekennzeichnet, daß die Aluminiumoxidfasern (10) der Niedrig-alpha-Phase angehören.

10. Keramischer Verbundstoff nach Anspruch 8 oder 9, dadurch gekennzeichnet, daß die Aluminiumoxidfasern (10) einen Aluminiumoxidgehalt von mindestens 80% aufweisen.

11. Keramischer Verbundstoff nach Anspruch 8, 9 oder 10, dadurch gekennzeichnet, daß er einen über die ganze Matrix (11) statistisch verteilten inerten Füllstoff (16) enthält.

12. Keramischer Verbundstoff nach einem der Ansprüche 8 bis 11, dadurch gekennzeichnet, daß der auf der Oberfläche der Fasern (10) gewachsene Mullit (12) Mullitknollen (13) einschließt, die sich von der Faser (10) in die Matrix (11) erstrecken und dadurch die Bindewirkung erhöhen.

## Revendications

1. Procédé de fabrication d'une matière céramique composite comprenant la mise en forme d'une bouillie aqueuse contenant une dispersion de fibres, de charge, de silice colloïdale et d'agents rhéologiques, la mise en forme de la bouillie pour obtenir la forme désirée et la cuisson du produit, caractérisé en ce que les libres sont des libres d'alumine dans une quantité allant jusqu'à 5 % en poids de la bouillie à libres et la silice colloïdale est incorporée dans une quantité allant de 1 % à 6 % en poids de la bouillie à fibres.

2. Procédé selon la revendication 1, caractérisé en ce que les libres d'alumine sont de phase alpha faible et ont des longueurs de 60 à 600 microns.

3. Procédé selon la revendication 1 ou 2, caractérisé en ce que la cuisson est effectuée à une température inférieure ou égale à environ 1350°C.

4. Procédé selon la revendication 1, 2 ou 3, caractérisé en ce que la charge inclut une charge inerte dans une quantité allant de 15 % à 30 % en poids de la bouillie à fibres.

5. Procédé selon l'une quelconque des revendications précédentes, caractérisé en ce que la charge inclut une charge active dans une quantité allant de 0,5 % à 5 % en poids de la bouillie à fibres.

6. Procédé selon l'une quelconque des revendications précédentes, caractérisé en ce que les fibres d'alumine sont d'abord dispersées dans la silice colloïdale et une proportion de la quantité totale d'eau à mettre en oeuvre.

7. Procédé selon l'une quelconque des revendications précédentes, caractérisé en ce qu'une mousse de polyuréthane souple à alvéoles ouverts réticulée est imprégnée de la bouillie céramique aqueuse et la mousse imprégnée est séchée et cuite pour brûler la mousse de polyuréthane, de telle sorte qu'un filtre de mousse céramique cuite soit obtenue.

8. Matière céramique composite comprenant une matrice d'alumine, fabriquée par cuisson d'un produit moulé formé à partir d'une bouillie céramique aqueuse contenant des fibres d'alumine, de la charge et de la silice coloïdale, la matrice (11) contenant des formations de mullite (12) provenant de la charge de silice colloïdale et de fribres d'alumine (10), une partie au moins de la croissance de mullite étant sur la surface des libres (10), caractérisée en ce que la matrice (11) contient des zones globulaires (14) distribuées de manière sensiblement uniforme dans toute la matrice (11), les zones globulaires étant sensiblement éloignées des fibres (10) et étant associées à des zones de porosité.

9. Matière céramique composite selon la revendication 8, caractérisée en ce que les fibres d'alumine (10) sont de phase alpha faible.

10. Matière céramique composite selon la revendication 8 ou 9, caractérisée en ce que les fibres d'alumine (10) ont une teneur d'alumine d'au moins 80 %.

11. Matière céramique composite selon la revendication 8, 9 ou 10, caractérisée en ce qu'elle contient une charge inerte (16) distribuée de manière aléatoire dans toute la matrice (11).

12. Matière céramique composite selon l'une quelconque des revendications 8 à 11, caractérisée en ce que les croissances de mullite (12) sur la surface des fibres (10) incluent des nodules (13) de mullite s'étendant de la libre (10) dans la matrice (11), améliorant ainsi l'effet de liaison.
